# EUROPEAN PATENT SPECIFICATION

(11) **EP 1 907 205 B1**
(45) Date of publication and mention of the grant of the patent: **16.05.2012**
(21) Application number: 06744788.8
(22) Date of filing: 30.05.2006
(51) Int. Cl.: B32B 27/08, B32B 1/08, F16L 11/08

(54) **MULTILAYER HOSE FOR CONVEYING A REFRIGERATING FLUID**
MEHRLAGIGER SCHLAUCH ZUM BEFÖRDERN EINES KÜHLFLUIDS
TUYAU MULTICOUCHES POUR TRANSPORTER UN LIQUIDE REFRIGERE

(30) Priority: 31.05.2005 IT TO20050370
(43) Date of publication of application: 09.04.2008
(73) Proprietor: Errecinque S.r.l., 10040 Leini (IT)
(72) Inventor: TERZOLO, Sergio, I-10077 San Maurizio Canavese (IT)
(74) Representative: Garavelli, Paolo
(86) International application number: PCT/IB2006/001404
(87) International publication number: WO 2006/129165

(56) References cited:
- EP-A- 0 881 419
- EP-A- 1 393 889
- US-A- 5 013 793
- US-A- 5 362 530
- US-A- 5 380 571
- US-A- 5 706 865
- US-A- 5 910 544
- US-B1- 6 652 937

## Description

### TECHNICAL FIELD

The present invention relates to a multilayer pipe made of polymer material, and in particular for conducting cooling fluid.

### BACKGROUND ART

As is known, civil and automotive air conditioning systems employ pipes made of thermoplastic or elastomeric material and preferably comprising a number of layers of different chemical compositions. For safety reasons, a multilayer air conditioning system pipe must be outwardly impermeable to cooling fluid, flame-resistant, and capable of withstanding both high and low pressure.

Currently used pipes made of elastomeric material normally comprise a nitrile elastomer layer, a plastic-fibre reinforcing layer, and an elastomeric cover layer, and are widely used by the inner layer of elastomeric material simplifying connection by eliminating the need for seals.

EP-A-1 393 889 discloses a refrigerant hose comprising a barrier layer, a reinforcing layer and an outer cover or jacket layer which may be selected from thermoplastic elastomers or vulcanisates which may be a thermoplastic vulcanisate derived from a polyolefin blended with IIR or NBR. In the examples a barrier layer of EVOH is employed.

US-A-5 706 865 discloses a multilayer pipe with a barrier layer of EVOH or polyamide, a reinforcing layer and a covering layer. The outer layer is based on a thermoplastic elastomer based on polyolefin or polyprobutyl.

US-A-5 362 530 discloses hoses comprising an outer cover based on a thermoplastic elastomer; chlorinated IIR/EPDM/PP blends are exemplified as outerlayers, and the inner layer is based on N6 and may be construed as a barrier layer.

Elastomeric pipes of the above type, however, are permeable to the cooling fluid circulating in the air conditioning system.

Pipes made of thermoplastic material are also used, but are permeable to atmospheric damp and so fail to protect the cooling fluid, in particular the lubricating oils contained in it, from hydrolysis.

### DISCLOSURE OF INVENTION

It is an object of the present invention to provide a multilayer pipe designed to replace currently used pipes of elastomeric or thermoplastic material, and which is impermeable to both cooling fluid and atmospheric damp, is high-pressure resistant, and of guaranteed high-and low-temperature and flame resistance.

According to the present invention, there is provided a multilayer pipe for conducting cooling fluid according to claim 1.

In a preferred embodiment of the present invention, in particular, the thermoplastic elastomer comprises an olefin.

### BRIEF DESCRIPTION OF THE DRAWINGS

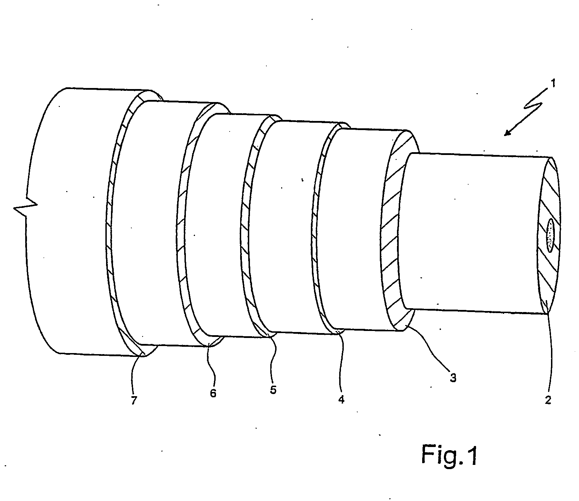

A non-limiting embodiment of the present invention will be described by way of example with reference to the attached Figure 1, which shows a partial section of a multilayer pipe 1.

### BEST MODE FOR CARRYING OUT THE INVENTION

More specifically, a multilayer pipe 1 in accordance with the invention comprises a barrier layer 3; a reinforcing layer 5 for increasing the mechanical strength of the pipe; and a cover layer 7.

A covinyl ester is preferably used as the main component of the mix of barrier layer 3, and is even more preferable EVOH. The thickness of barrier layer 3 ranges on average between 0.05 and 0.25 mm, and is preferably 0.10 mm.

Barrier layer 3 advantageously provides for greatly reducing permeation by oxygen into the pipe, thus reducing oxidation of the metal parts of the system coming into contact with the cooling fluid.

A reinforcing layer 5, preferably comprising braided yarn, is provided on the outside of barrier layer 3.

The yarn is preferably made of material comprising polyester.

The thickness of reinforcing layer 5 ranges on average between 0.4 and 0.6 mm, and is preferably 0.5 mm.

Reinforcing layer 5 advantageously provides for good resistance to high system operating pressure, by being burst-resistant, e.g. is capable of withstanding pressure of over 250 bars.

According to the present invention, the multilayer pipe comprises a cover layer 7 comprising an olefin-based thermoplastic elastomer, and a butyl or halobutyl elastomer, i.e. obtained from monomers containing a butyl or halobutyl group, preferably chlorobutyl. The thermoplastic elastomer is preferably at least partly cured.

The olefin used preferably comprises a styrene-butadiene-styrene copolymer.

Even more preferably, the thermoplastic elastomer is, for example, TREFSIN.

The thickness of cover layer 7 preferably ranges between 0.5 and 0.7 mm, and is more preferably 0.6 mm.

A cover layer 7 advantageously solves the problem of absorption of atmospheric damp, thus protecting the lubricating oils in the cooling fluid circulating in the system from hydrolysis.

Multilayer pipe 1 according to the present invention also comprises at least one layer 2 comprising polyamide, which reduces outward permeation of the cooling fluid, thus minimizing efficiency loss of the system.

The thickness of layer 2 ranges between 0.4 and 0.6 mm, and is preferably 0.5 mm.

The multilayer pipe also comprises an adhesive layer 6 comprising modified EPDM, preferably a SANTOPRENE. Adhesive layer 6 ensures adhesion of cover layer 7 and reinforcing layer 5 with no need for adhesives in between.

The thickness of adhesive layer 6 preferably ranges between 0.30 and 0.70 mm, and is preferably 0.50 mm.

In a preferred embodiment of the present invention, multilayer pipe 1 comprises, in sequence, an inner first layer comprising polyamide (2); a barrier layer (3); a second layer comprising polyamide (4); a reinforcing layer (5); an adhesive layer (6); and a cover layer (7).

The structure of multilayer pipe 1 according to the present invention combines high pressure resistance and temperature resistance within a range of -30°C and 130°C.

Moreover, it is extremely impermeable to cooling fluid vapours, such as R.134-HCF, R.22-HCFC, R404-HFC, R.407C-HFC, R.410.G-HFC, R.507-HFC, to natural gas, such as ammonia, carbon dioxide, butane and propane, and to atmospheric damp, by virtue of the particular cover layer comprising butyl material.

Given the impermeability of the materials from which they are made, multilayer pipes according to the invention are especially suitable for use over long tracts of civil air conditioning systems.

In particular, multilayer pipes according to the invention prevent cooling fluid leakage of air conditioning systems, while at the same time preventing entry into the pipes themselves of natural gases in the atmosphere.

The multilayer pipe according to the present invention is advantageously compatible, i.e. does not interact, with compressor lubricating oils, such as esters, glycols, and mineral oils such as Artic 155.

Even more advantageously, the multilayer pipe according to the present invention is flexible, and can therefore be fitted into tight spaces, as, for example, in the case of automotive air conditioning systems.

Clearly, changes may be made to the multilayer pipe as described and illustrated herein - in particular, to the percentage ratio of the chemical components of the various layers, and to the thickness and number of layers - without, however, departing from the scope of the present invention.

The pipe according to the present invention is produced using the known process for producing thermoplastic cooling fluid pipes, but using innovative materials and material combinations.

Table 1 shows the composition of the layers of a pipe without the adhesive layer, not in accordance with the present invention.

**Table 1**

| Layer | Chemical composition | Trade name | Layer thickness |
|---|---|---|---|
| Inner layer | PA-6 and polyolefin copolymer | GRILON^{®} BRZ-334-H | 0.50 mm |
| Barrier layer | EVOH | EVAL^{®}-F101. A | 0.10 mm |
| Intermediate layer | PA-6 and polyolefin copolymer | GRILON^{®} BRZ-334-H | 0.50 mm |
| Reinforcing layer | Polyester fibre yarn | DIOLEN^{®}-PY-164-S-1100 | 0.50 mm |

| Adhesive layer | Modified EPDM | Santoprene^{®} X-8291-80.TB | 0.50 mm |
|---|---|---|---|
| Cover layer | Polyolefin-and butyl-based thermoplastic elastomer | TREFSIN^{®} -3271-65 W.308 | 0.60 mm |

### Example 2

Permeation is measured as per DIN 13192 and EN 1736 standards.

The test method employs a helium tracer gas; and the exact loss of the pipe, expressed in Kg/year, is determined using a sensor for detecting each single gas molecule.

Given the small size of helium gas molecules, testing is highly selective, and comprises the steps of: connecting a metre of test pipe at both ends, and sealing one end; inserting the pipe inside an airtight chamber, bringing the pipe to the desired temperature, controlled using an optical pyrometer, and forming a vacuum in both the airtight chamber and the test pipe; filling the pipe with helium tracer gas to the desired pressure; and analysing the outside environment of the pipe, i.e. the airtight chamber, for at least an hour using a mass spectrometer. The resulting value is the permeation of the pipe, including the fitting.

The cycle is fully automated, with no labour required.

Table 2 shows the permeation values of the pipe with the composition shown in Example 1.

**Table 2**

| Pressure (bar) | Temperature (°C) | Permeability (helium/ml) | Test time (sec) |
|---|---|---|---|
| 12.5 | 30 | 2.1⁻⁶ | 100 sec |
| | | 2.5⁻⁶ | 1200 sec |
| | | 2.5⁻⁶ | 2400 sec |
| | | 2.3⁻⁶ | 3600 sec |

## Claims

1. A multilayer pipe (1) for conducting cooling fluid, **characterised in that** it comprises, in a sequence, an inner first layer comprising polyamide (2); a barrier layer (3); a second layer comprising polyamide (4); at least one reinforcing layer (5); an adhesive layer (6); and at least one cover layer (7), said cover layer (7) comprising an olefin-based thermoplastic elastomer and a butyl or halobutyl elastomer, namely obtained from monomers containing a butyl group, said thermoplastic elastomer comprising an olefin composed of a styrene-butadiene-styrene copolymer.

2. A multilayer pipe as claimed in Claim 1, **characterized in that** said reinforcing layer (5) comprises a braided yarn.

3. A multilayer pipe as claimed in Claim 2, **characterized in that** said yarn comprises polyester.

4. A multilayer pipe as claimed in any one of the foregoing Claims, **characterized in that** said adhesive layer (6) comprised modified EPDM.

5. A multilayer pipe as claimed in any one of the foregoing Claims, **characterized in that** said inner first layer comprising polyamide (2) is 0.4 to 0.6 mm thick; said barrier layer (3) is 0.05 to 0.25 mm thick; said second layer comprising polyamide (4) is 0.4 to 0.6 mm thick; said reinforcing layer (5) is 0.4 to 0.6 mm thick; said adhesive layer (6) is 0.30 to 0.50 mm thick; and said cover layer (7) is 0.5 to 0.7 mm thick.

6. A multilayer pipe as claimed in any one of the foregoing Claims, **characterized in that** said inner first layer comprising polyamide (2) is 0.5 mm thick; said barrier layer (3) is 0.10 mm thick; said second layer comprising polyamide (4) is 0.5 mm thick; said reinforcing layer (5) is 0.5 mm thick; said adhesive layer (6) is 0.5 mm thick; and said cover layer (7) is 0.6 mm thick.

## Patentansprüche

1. Mehrschichtiges Rohr (1) für die Leitung von Kühlflüssigkeit, das **dadurch gekennzeichnet ist, dass** es nacheinander eine erste interne Polyamidschicht (2) enthält; eine Schrankenschicht (3); eine zweite Polyamidschicht (4); mindestens eine Verstärkungsschicht (5); eine Klebeschicht (6); und mindestens eine Deckschicht (7), die genannte Deckschicht (7) schließt auf Olefin basiertes thermoplastisches Elastomer sowie Butyl- und ein Halobutylkautschuk ein, der aus Monomeren erhalten wird, die eine Butylgruppe enthalten, das genannte thermoplastische Elastomer schließt Olefin ein, das aus Styrol-Butadien-Styrol-Kautschuk zusammengesetzt ist.

2. Mehrschichtiges Rohr gemäß Patentanspruch 1, das **dadurch gekennzeichnet ist, dass** die genannte Verstärkungsschicht (5) einen geflochtenen Draht einschließt.

3. Mehrschichtiges Rohr gemäß Patentanspruch 2, das **dadurch gekennzeichnet ist, dass** der genannte Draht Polyester enthält.

4. Mehrschichtiges Rohr gemäß einem der vorhergehenden Patentansprüche, das **dadurch gekennzeichnet ist, dass** die genannte Klebeschicht (6) modifiziertes EPDM enthält.

5. Mehrschichtiges Rohr gemäß einem der vorhergehenden Patentansprüche, das **dadurch gekennzeichnet ist, dass** die genannte erste interne Polyamidschicht (2) 0,4 bis 0,6 mm dick ist; die genannte Schrankenschicht (3) 0,05 bis 0,25 mm dick ist; die genannte zweite Polyamidschicht (4) 0,4 bis 0,6 mm dick ist; die genannte Verstärkungsschicht (5) 0,4 bis 0,6 mm dick ist; die genannte Klebeschicht (6) 0,30 bis 0,50 mm dick ist; und die genannte Deckschicht (7) 0,5 bis 0,7 mm dick ist.

6. Mehrschichtiges Rohr gemäß einem der vorhergehenden Patentansprüche, das **dadurch gekennzeichnet ist, dass** die genannte erste interne Polyamidschicht (2) 0,5 mm dick ist; die genannte Schrankenschicht (3) 0,10 mm dick ist; die genannte zweite Polyamidschicht (4) 0,5 mm dick ist; die genannte Verstärkungsschicht (5) 0,5 mm dick ist; die genannte Klebeschicht (6) 0,5 mm dick ist; und die genannte Deckschicht (7) 0,6 mm dick ist.

## Revendications

1. Tube multicouche (1) pour conduire du fluide de refroidissement, **caractérisé par** le fait de comprendre, en séquence, une première couche interne comprenant polyamide (2) ; une couche de barrière (3) ; une seconde couche comprenant polyamide (4) ; au moins une couche de renfort (5) ; une couche adhésive (6) ; et au moins une couche de couverture (7), ladite couche de couverture (7) comprenant un élastomère thermoplastique basé sur oléfine et un élastomère butylique ou halo-butylique, c'est-à-dire obtenu à partir de monomères contenant un groupe butylique, ledit élastomère thermoplastique comprenant une oléfine composée d'un copolymère de styrène-butadiène-styrène.

2. Tube multicouche selon la revendication 1, **caractérisé par le fait que** ladite couche de renfort (5) comprend un fil tressé.

3. Tube multicouche selon la revendication 2, **caractérisé par le fait que** ledit fil comprend polyester.

4. Tube multicouche selon une quelconque des revendications précédentes, **caractérisé par le fait que** ladite couche adhésive (6) comprend EPDM modifié.

5. Tube multicouche selon une quelconque des revendications précédentes, **caractérisé par le fait que** ladite première couche interne comprenant du polyamide (2) a une épaisseur de 0,4 à 0,6 mm ; ladite couche de barrière (3) est souvent de 0,05 à 0,25 mm ; ladite seconde couche comprenant du polyamide (4) a une épaisseur de 0,4 à 0,6 mm ; ladite couche de renfort (5) a une épaisseur de 0,4 à 0,6 mm ; ladite couche adhésive (6) a une épaisseur de 0,30 à 0,50 mm ; et ladite couche de couverture (7) a une épaisseur de 0,5 à 0,7 mm.

6. Tube multicouche selon une quelconque des revendications précédentes, **caractérisé par le fait que** ladite première couche interne comprenant polyamide (2) a une épaisseur de 0,5 mm ; ladite couche de barrière (3) est souvent de 0,10 mm ; ladite seconde couche comprenant polyamide (4) a une épaisseur de 0,5 mm ; ladite couche de renfort (5) a une épaisseur de 0,5 mm; ladite couche adhésive (6) est souvent 0,5 mm; et ladite couche de couverture (7) est souvent 0,6 mm.
